# EUROPEAN PATENT SPECIFICATION

(11) **EP 2 006 005 B1**
(45) Date of publication and mention of the grant of the patent: **17.02.2016**
(21) Application number: 07730497.0
(22) Date of filing: 15.03.2007
(51) Int. Cl.: B01L 7/00, G01N 1/22, B01D 1/14, B01D 3/34, B01D 3/42, B01D 1/00, G01N 1/40

(54) **SEMI-AUTOMATIC DEVICE FOR THE EVAPORATION OF SOLVENTS BY ANALYTICAL GAS FOR CONCENTRATION OF ATMOSPHERIC SAMPLES, WHICH IS DESIGNED TO IDENTIFY AND QUANTIFY ORGANIC CHEMICAL COMPOUNDS WITH TOXIC PROPERTIES**
HALBAUTOMATISCHE VORRICHTUNG ZUR VERDAMPFUNG VON LÖSUNGSMITTELN DURCH ANALYSENGAS ZUM AUFKONZENTRIEREN VON ATMOSPHÄRENPROBEN, DAS ZUR IDENTIFIZIERUNG UND QUANTIFIZIERUNG VON ORGANISCHEN CHEMISCHEN VERBINDUNGEN MIT TOXISCHEN EIGENSCHAFTEN AUSGELEGT IST
DISPOSITIF SEMI-AUTOMATIQUE DESTINÉ À L'ÉVAPORATION DE SOLVANTS EN GAZ ANALYTIQUE EN VUE DE CONCENTRER DES ÉCHANTILLONS ATMOSPHÉRIQUES PERMETTANT D'IDENTIFIER ET DE QUANTIFIER LES COMPOSÉS CHIMIQUES ORGANIQUES À PROPRIÉTÉS TOXIQUES

(30) Priority: 16.03.2006 CL 200600590
(43) Date of publication of application: 24.12.2008
(73) Proprietor: UNIVERSIDAD TECNICA FEDERICO SANTA MARIA (USM), Valparaíso IV Region (CL)
(72) Inventor: CERECEDA BALIC, Francisco, Quilpué (CL); OLIVARES SALINAS, Manuel, Viña Del Mar (CL); CARRASCO ESPINOSA, Héctor, Viña Del Mar (CL); CERECEDA BALIC, Gabriel, Quilpué, V Region (CL)
(74) Representative: ZBM Patents - Zea, Barlocci & Markvardsen
(86) International application number: PCT/ES2007/070057
(87) International publication number: WO 2007/104824

(56) References cited:
- WO-A1-88/06054
- DE-A1- 3 422 360
- US-A- 4 600 473
- US-A- 4 600 473
- US-A- 5 061 630
- US-A- 5 061 630
- US-A- 6 146 595

## Description

### FIELD OF THE INVENTION

The invention relates to the evaporation of solvents from samples in solution using analytical gas. More specifically, it is a semiautomatic device, a system and a method of operation that allows evaporating solvents by sweeping the vapor produced by its exposure to a gas flux for sample concentration.

### BACKGROUND OF THE INVENTION

The processing of atmospheric samples with the purpose to identify and quantify organic chemical compounds with toxic properties such as Polycyclic Aromatic Hydrocarbons (PAHs) and Polychlorinated Biphenyls (PCBs) comprises a series of slow, exhaustive and tedious procedures which are usually not automatized and certainly not controlled.

One of these procedures consists in the volume reduction of a sample extract dissolved in an organic solvent. This process consists in evaporating the solvent by exposure to a N₂ current, at constant flux, at a determined distance over the solvent surface and at a temperature of at least 0 [°C] in the container that holds the extract. The critical point of the evaporation is the time when the last microliters of the sample must be evaporated, a time when the flux of N₂ must be diminished and after that the evaporation must be stopped in the right time; because if this is not done there is a risk of evaporating the analytes of interest.

All this difficult hand-operated procedure presumes a series of careful steps that must be preformed by a highly trained operator and it inevitably has low reproducibility and repetitiveness index, making difficult the quality control of this type of analysis.

At the present time, there are available in the market some commercial equipments to perform those functions; one of them is the **Analytical Nitrogen Evaporator for Sample Concentration, N-EVAP 12 Model,** by GENEQ Inc., Montreal - Canada. The main characteristics of this equipment are: simultaneous heating of 12 samples by immersion in water of container vials with 5-29 mm diameter, using a heating system of 500 W, at temperatures that can be regulated between 30-70°C (30-130°C dry), manual regulation of the height of each nozzle for gas supply, indication of the total gas flux supplied (0-5 Ipm) by means of a singular flux sensor and manual control of the individual flux using needle valves. Gas supply at 34,5 - 69 kPa (5 - 10 [psig]).

Another available equipment is the **FAST Analytical Evaporation and Concentration, ZipVap 18 Model,** by Chrom Tech, Inc., Minessota - USA.. Its mains characteristics are: simultaneous heating of 18 samples by contact of the container vials up to 25 mm diameter with a zirconium heater, at temperatures of the set regulated up to 140°C, manual regulation of the height (114 mm [4.5 inches]) and inclination (90-360 grades) of the set of nozzles for gas supply, and manual individual adjustment of the gas flux supplied by means of needle valves.

Other equipments, such as the **Cole-Parmer^{®} Bar Evaporators,** and the **Test tube evaporator** from the same company, only offer a manual solution by means of heating the sample, with controls for heating.

The patent of invention US 3.977.935, 31.08.76, "Method and apparatus for evaporating liquids", Kowarski, describes and method for liquid evaporation to separate solid substances contained in such liquid, wherein a subatmospheric pressure is applied to a portion of the sample, allowing the evaporation of the liquid. The apparatus has means to heat the sample and means to produce the vacuum needed for evaporation.

The patent of invention US 5.100.623, dated 03.31.92, "Laboratory evaporation apparatus", Friswell, describes an apparatus to evaporate a liquid sample with solids, by means of cycles of evaporation with detectors that measure evaporation according to certain given conditions.

The patent of invention US 5.620.561, dated 04.15.97, "Vortex evaporation", Kuhn et al. describes an evaporation method for a liquid sample with solids, wherein the sample is heated and placed inside a container that has an orbital movement, and vacuum could be applied to the equipment chamber.

None of these equipments allows cooling the sample to zero degrees Celsius, and they do not guarantee that the gas flux supplied to a particular sample is constant because they only measure the total gas consumption, and the gas flux could change according to the position of the individual supply provided by each needle valve. In some cases the procedure is done manually. In other cases the movement of each nozzle can not be individually adjusted in relation to each sample.

Document US4600473 discloses improved means for evaporating liquid to obtain solid residue. The disclosures comprises a receptacle for holding the liquid to be treated and means to sense the temperature of the evaporating process and terminate the evaporating process at any appropriate predetermined temperature condition, thereby avoiding excessive drying of a particular material. Document US5061630 discloses a laboratory apparatus for optionally heating or cooling samples, comprising a block of one or more Peltier elements having one of their thermal poles in thermal contact with an essentially rectangular block of heat conducting metal, and the other pole in thermal contact with a heat exchanger, this latter being thermally insulated from the metal block. One of the outer surfaces of the rectangular metal block serves as a working outer surface for heating or cooling the samples. All outer surfaces of the metal block, with the exception of the working surface and the surface in contact with the Peltier elements are thermally insulated. The working surface may be used for heating or cooling at will through the inversion of the direction of the alimentation current for the Peltier elements.

Due to this lack of appropriate equipments, at the present time it is used a non-automatized device and an operation procedure whose performance depends on the dedication of an experienced operator, who is responsible of the success or failure of the analysis procedure. For a successful operation it is required that the operator supervises all the procedure development from its start to its ending, which can last between 45 minutes to one hour, and consists of adjusting the movement of the nozzle, manipulating a needle valve to adjust the doses (without knowing the flux of gas that is really being supplied), adding ice to the exterior of the vial that holds the sample to keep the temperature constant and close to zero degrees Celsius, and watching the solvent level to determine the end of the operation. That is to say, there are many sources of failure, and it is practically impossible to obtain a uniform, reproducible and repetitive operation. The risk is ruining the sample, which must be exposed twice to this procedure of identification and quantification of organic chemical compounds in ambient samples, with a very significant cost of materials and opportunity.

In order to solve this problem, the proposed invention consists of a device, and a method of operation that performs these functions in a semiautomatic form, allowing to evaporate a plurality of environmental samples diluted in solvents in an optimal manner, by means of sweeping with gas, preferably nitrogen, and an electronic control system which allows superficial evaporation of the solvent, in a cooled sample at constant temperature, due to exposure to a controlled flux of N₂. Additionally, the device design considers safety measures to protect the extract, such as: acoustic and luminous signals that warn about the critical moment of the process, decrease of the nitrogen flux during the final step of the evaporation and valves to completely turn off the nitrogen (gas) flux if it has exceeded a determined time.

### BRIEF DESCRIPTION OF THE INVENTION

The device consists of a plurality of sample processors, wherein each one is composed of a solenoid valve and sensors for control of the N₂ flux, a nozzle that can be displaced by a stepper motor, a container vial that is placed in a thermal isolated aluminum container, a Peltier element for cooling, a sensor for temperature control of the sample at 0 °C, and a capacitive sensor for solvent level detection at the interior of the container vial.

All these elements are electronically operated by means of a mini controller that performs a semiautomatic evaporation process, with parameters selected by the operator using a user interface which consists of a panel of push buttons and a display device, of the LCD type, with individual and group control of the sample processors.

The semiautomatic operation procedure, incorporated in the program to be executed by the micro controller, at the beginning permits the user to insert the container vial inside the thermal isolated aluminum container. It also activates at the beginning the cooling control of the sample in such a manner that the process of evaporation can start only once the sample have reached 0 degrees Celsius.

At that moment, the user can decide whether to start the procedure which consists of applying the maximum gas flux to the sample and let the nozzle to start descending automatically; when the nozzle has traveled 50% of its total displacement, the flux is automatically reduced to 50%. Once the nozzle has performed 100% of its displacement, the stepped motor is stopped and the device is left waiting for the capacitive sensor to indicate when the sample is close to reach dryness. When this happens, an audible alarm is turned on to let the user know that the end of the evaporation process must be supervised, to automatically shut off the nitrogen supply and bring the nozzle to its initial position to allow the user to remove the sample. In the event of the user does not listen to the alarm, the flux will be cut and the nozzle will ascend to the initial position after a predetermined supervision time.

The device can also be operated manually which allows the user to lift or lower the nozzle to the required position using the up-down buttons of the nozzle, and interrupting the semiautomatic procedure at any time if necessary.

The device is designed to evaporate environmental samples at low temperatures, by means of sweeping the vapor produced by the superficial contact between the solvent and the nitrogen flux, which is different from other devices that heat the sample to evaporate the solvent by thermal conduction and at the same time they sweep the vapor using the nitrogen flux, but with these thermal conditions the analytes of interests can also be evaporated.

With this invention, the operator has the advantage of being freed of a large part of his task, which is reduced to initiating and ending the process once the equipment has emitted an audible and luminous alarm, and that means that the operator is freed from the procedure for more that 85% of its total duration, a time that can be used to perform other chores of chemical analysis, and also the automatization of the rest of the process guarantees its desired reproducibility and repetitiveness.

Therefore, the first objective of the invention is to provide a semiautomatic device, with at least a processor to evaporate solvents by sweeping its vapor produced by exposure to a flux of gas for sample concentration, which is useful for processing atmospheric samples destined for identification and quantification of organic chemical compounds with toxic properties, wherein the device consists of:
i. a solenoid valve and sensors for gas flux control;
ii. a dosing nozzle for gas supply that can be displaced with the use of a stepped motor;
iii. a nozzle control to regulate the approach of the dosing nozzle for gas supply to the sample;
iv. a container vial that is placed inside a thermal isolated aluminum container;
v. a Peltier element for cooling;
vi. a sensor to control that temperature of the sample is kept at 0 °C;
vii. a capacitive sensor to detect the solvent level inside the container vial; and
viii. alarms to indicate the level of the extraction solution contained in the vial.

Wherein the gas flux is N₂ flux, which is externally supplied at a pressure below 4×10² kPa, with a control for gas flux within the range of 0 - 1000 sccm (cubic centimeters per minute under standard conditions of temperature and pressure). The nozzle can be displaced between 0 to 40 mm and the stepped motor has a resolution of 50 µm of displacement per step. The vial has preferably, 18 mm of diameter and 5 ml of capacity. The sensor is of the capacitive type and detects the solvent level inside the vial, with a preferred resolution of 0.5 ml.

A second objective is to provide an electronic system to evaporate solvents by sweeping the vapor produced when it is exposed to a flux of gas for sample concentration, which is useful to process atmospheric samples destined to identification and quantification of organic chemical compounds with toxic properties, wherein the system consists of:
a. a semiautomatic device, with at least one sample processor to evaporate solvents by sweeping its vapor produced by exposure to a flux of gas for sample concentration, which consists of:
   i. a solenoid valve and sensors for gas flux control;
   ii. a dosing nozzle for gas supply that can be displaced with the help of a stepped motor;
   iii. controls for the dosing nozzle for gas supply to regulate its approach to the sample;
   iv. a container vial that is placed inside a thermal isolated aluminum container;
   v. a Peltier element for cooling;
   vi. a sensor to control that the temperature of the sample is kept at 0°C; and
   vii. a capacitive type sensor, to detect the level of the solvent inside the container vial; and
   viii. alarms to indicate the level of the extraction solution contained in the vial;
b. a microcontroller that regulates the operation of such device, controlling at least one of a plurality of sample processors, establishing in each sample processor controls for cooling the solvent, to regulate the displacement of the dosing nozzle for gas supply, and the gas flux applied to the extraction solution; and
c. a user interface to select the parameters to be controlled and to visualize the alarms for the plurality of sample processors.

Wherein the gas flux is N₂ flux, and it is externally supplied at a pressure below 4×10² kPa; with a control for gas flux within the range of 0 - 1000 sccm (cubic centimeters per minute under standard conditions of temperature and pressure). The nozzle can be displaced between 0 to 40 mm and the stepped motor has a resolution of 50 µm of displacement per step. The vial has preferably, 18 mm of diameter and 5 ml of capacity. The sensor is of the capacitive type and detects the solvent level inside the vial, with a preferred resolution of 0.5 ml.

A third objective of the invention is to deliver an operation method of a semiautomatic device for solvents evaporation by sweeping the vapor produced by exposure to a flux of gas for sample concentration, which is useful for processing of atmospheric samples destined for identification and quantification of organic chemical compounds with toxic properties, wherein the operation method consists of the following steps:
a. it provides a semiautomatic device with a plurality of processors for solvent evaporation by sweeping the vapor produced by exposure to a flux of gas for sample concentration, wherein each sample processor consists of:
   i. a solenoid valve and sensors for gas flux control;
   ii. a dosing nozzle for gas supply that can be displaced with the help of a stepped motor;
   iii. controls for the dosing nozzle for gas supply to regulate its approach to the sample;
   iv. a container vial that is placed inside a thermal isolated aluminum container;
   v. a Peltier element for cooling;
   vi. a sensor to control that the temperature of the sample is kept at 0°C; and
   vii. a capacitive type sensor, to detect the level of the solvent inside the container vial; and
      i. alarms to indicate the level of the extraction solution contained in the vial;
b. turn on the device and check that the nozzle in each sample processor is placed at the initial position, which is at maximum distance from the sample;
c. insert the vial inside the thermal isolated aluminum container;
d. activate the cooling control to bring down the sample temperature to 0 °C;
e. verify that the sample temperature is 0 °C;
f. let the user initiate the evaporation process applying maximum gas flux to the sample, with which the nozzle automatically begins descending;
g. automatic reduction of gas flux to 50% once the nozzle has reached 50% of its total displacement;
h. automatic detention of the nozzle decent once it has reached 100% of its total displacement;
i. wait for alarm activation that indicates that the sample is close to dryness;
j. supervise the end of the evaporation process to shut off the gas flux supply;
k. bring the nozzle to its initial position, which is at maximum distance form the sample; and
l. remove the sample.

Wherein the gas flux is N₂ flux, and it is externally supplied at a pressure below 4×10² kPa; with a control for gas flux within the range of 0 - 1000 sccm (cubic centimeters per minute under standard conditions of temperature and pressure). The nozzle can be displaced between 0 to 40 mm and the stepped motor has a resolution of 50 µm of displacement per step. The vial has preferably, 18 mm of diameter and 5 ml of capacity.

### BRIEF DESCRIPTION OF THE FIGURES

Figure 1A shows a posterior isometric view of the whole device of the invention, as an option for the simultaneous processing of 6 samples.
Figure 1B shows a frontal isometric view of the whole device of the invention, as an option for the simultaneous processing of 6 samples.
Figure 2A shows a posterior, lateral and frontal view of the whole device of the invention, as an individual sample processor option.
Figure 2B shows the general arrangement of the components of the invention device as an individual processor.
Figure 3 shows the cooling system and the system for minimum level detection.
Figure 4 shows the aluminum block where the vial is inserted and the capacitive sensor to which the temperature sensor is affixed.
Figure 5 shows the arrangement of the vial, the capacitive sensor and the temperature sensor in relation to the aluminum block.
Figure 6 shows the position of the vial in the aluminum block and the position of the capacitive sensor in an isometric cut view.
Figure 7 shows an upper view of the position of the vial inside the aluminum block and the position of the capacitive sensor.
Figure 8 shows the arrangement of the vial inside the aluminum block and of the capacitive sensor in a lateral cut view
Figure 9 shows the mechanism for nozzle displacement and for detection of "Home" position.
Figure 10A describes the semiautomatic operation procedure of the device of the invention by means of a flowchart.
Figure 10B describes the manual operation mode.
Figure 11 shows a graph with the temporal evolution of the sample temperature, the nozzle position and the nitrogen flux supplied during one cycle of semiautomatic operation of the device of the invention, for one vial.

### DETAILED DESCRIPTION OF A PREFERRED EXECUTION

The device can be composed of a plurality of sample processors, but in this case it is described an individual processor, which consists of a solenoid valve and a flow sensor to control de N₂ flux within the range of 0 - 1000 sccm (cubic centimeters per minute under standard conditions of temperature and pressure), a nozzle that can be displaced between 0 to 40 mm with the help of a stepped motor which has a resolution of 50 µm of displacement per step, a vial with a diameter of 18 mm and 5 ml of capacity which is placed inside a thermal isolated aluminum container, a Peltier element for cooling, a sensor to control the sample temperature at 0 °C, and a sensor of the capacitive type to detect the solvent level inside the vial, with a preferred resolution of 0.5 ml.

All these elements are electronically operated by signal conditioner circuits and a microcontroller that performs a semiautomatic evaporation program, with parameters selected by the operator with the use of a user interface which consists of a button panel and a visualization system, of the LCD display type, for each or all the sample processors.

The main characteristics of the device are now summarized:
- Control of cooling temperature of the solvent that contains the extract, by means of a Peltier element and a temperature sensor, to keep the temperature constant at 0°C
- Mechanical displacement of the N₂ nozzle towards the sample being evaporated, with the help of a stepped motor, at a speed of 40 mm per T minutes, where T is a time selected by the operator (T=15, 30, 45 or 60 min.)
- Control of the nitrogen flux applied to the extract solution with the help of a flow sensor and a solenoid valve, wherein the flux is regulated to provide 600 sccm during the first half of the nozzle advancement and 300 sccm from the second half until the end of the evaporation process, independently of the N₂ supply pressure which is within the range of 2 to 4x10² kPa (2 to 4 [bar]).
- Alarm that indicates the sample is close to dryness, thanks to the incorporation of a capacitive sensor to detect the level of the extraction solution contained in the vial. When the vial contains approximately 0.5 ml of extraction solution, a sonorous and luminous alarm indicates to the operator to supervise the end of the evaporation process.

The procedure of semiautomatic operation incorporated in the program performed by the microcontroller, starts by turning on the device which makes the nozzle rapidly ascend to its initial "Home" position, if it is not already there, to allow the user to insert the vial in the thermal isolated aluminum container. The cooling control for the sample is also immediately activated which makes possible to initiate the evaporation process only once the sample has reached 0 degrees Celsius, process that is initiated by pressing the "Start" button. From that moment on the maximum flux is applied to the sample and the nozzle starts automatically descending at a speed of 40 mm in T minutes. Once the nozzle has performed 50% of its total displacement, the flux is automatically reduced to 50%. As soon the nozzle has performed 100% of its trip, the stepped motor is stopped and the device is left waiting for the capacitive sensor to indicate that the sample is close to dryness. When that happens, a sonorous and luminous alarm indicates to the user to supervise the end of the evaporation process, that is, decide when to push the finish (Fin) button to automatically shut off the nitrogen supply and bring the nozzle to its initial "Home" position, and let the user to remove the sample. If the user does not perceive the alarm signal, the flux is automatically shut off and the nozzle will ascend after a predetermined supervision time Tₛ, which is proportional to the selected T time for nozzle displacement (Tₛ=T/6).

Furthermore, the equipment can be manually operated, that is, the semiautomatic procedure can be interrupted at any time to continue it manually, allowing the user to move the nozzle up and down to the required position without considering the indication of the sensors, by using the up-down nozzle buttons, for the individual sample processor or all of them.

In this manner, the operator is freed of a large part of his task, which is reduced to initiate and finish the procedure once the equipment has emitted a sonorous and luminous alarm that indicates there are 0,5 ml of solvent left in the vial, which translates to 5 minutes at most of dedication time per sample, leaving the operator 88 to 98% of the total procedure time free to devote to other chemical analysis tasks, and guaranteeing the desired reproducibility and repetitiveness that the automatization of the rest of the procedure brings.

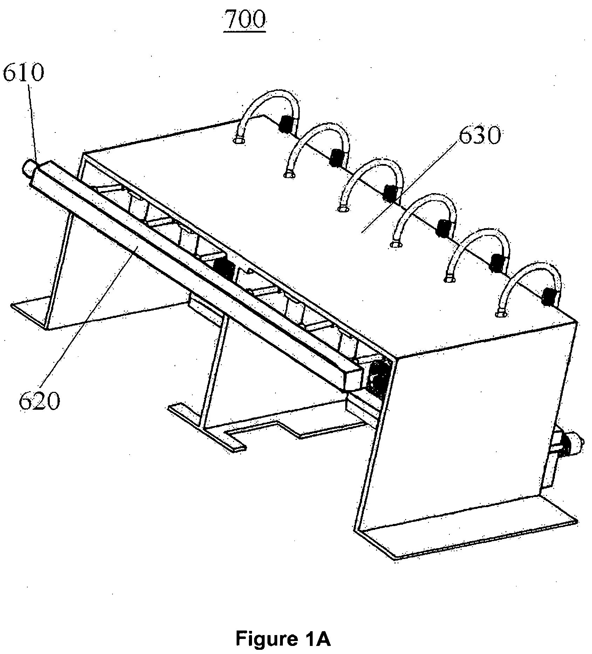

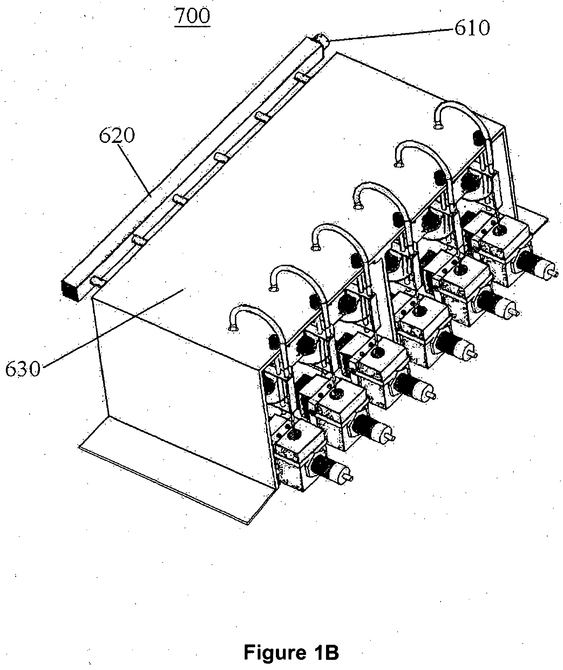

A posterior isometric view of the device as a multiple sample processor is shown in figure 1A and a frontal isometric view of the same device is shown in figure 1B. Both figures, by way of illustration, show a equipment with 6 evaporation devices (sample processors), each one with independent nitrogen current, all of them enclosed in a case (630), feed by the same source of gas supply (610). The supplied gas is distributed to each individual processor by a manifold (620).

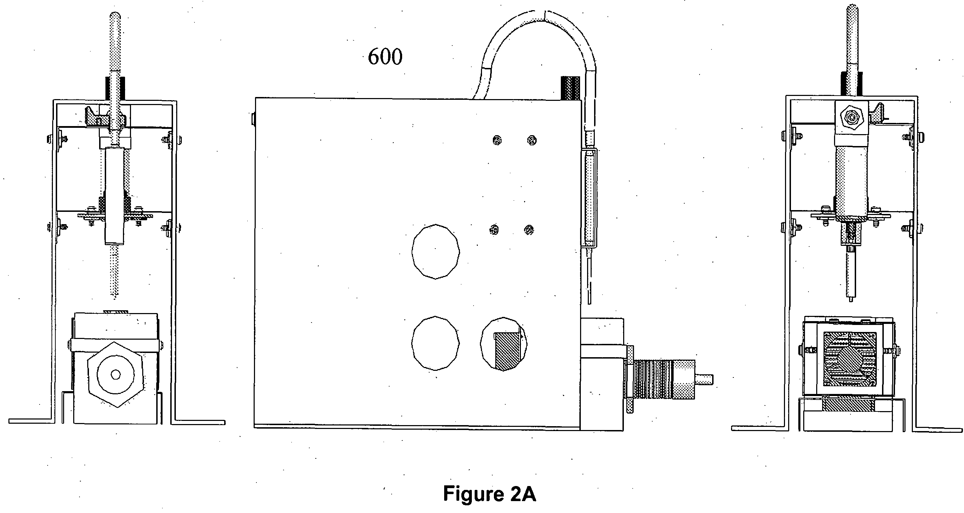

Figure 2A shows the device (600) for evaporation in nitrogen current in posterior, lateral and frontal view. The device (600) is externally fed with a nitrogen supply at a pressure below 4x10² kPa (4 bar), and a voltage supply of the switching type, of 300W with voltages of ±12 Vcc and +5 Vcc. The device control consists of a control electronic system comprising electronic circuits, a microcontroller, an associated program and an operation interface (button panel and LCD display), to which the electrical signals provided by the sensors are connected and from which the control signals for the actuators come out to operate the device.

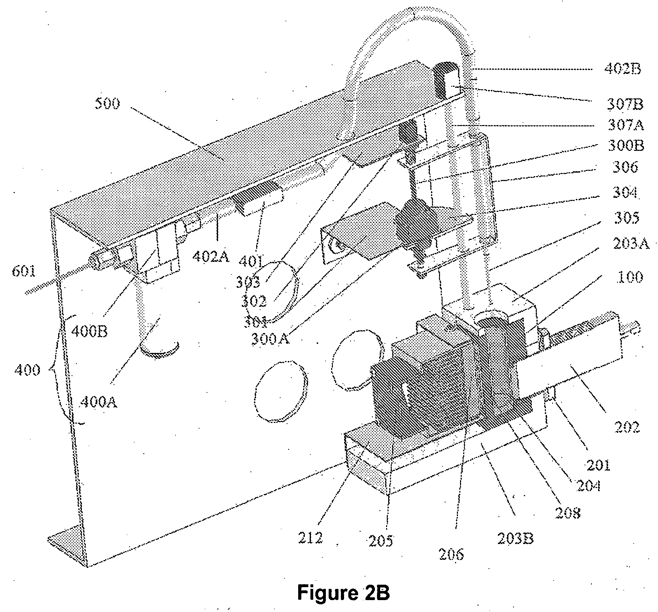

Figure 2B shows an isometric cut view of the device (600) as an individual sample processor option, which has a nitrogen supply entrance (601), where it can be seen the internal electromechanical elements that make it up (for simplicity purposes, it is not shown the control electronic system, which is also mounted inside the device (600), nor the operation interface that is mounted in the lateral face of the device (600)).

The vial with interior conical base (204) is appreciated in figure 2B, which preferably has 18 mm of diameter and 5 ml of capacity, and holds a sample in solution whose solvent is evaporated by sweeping the vapor produced by its superficial contact with the nitrogen flux, while it is kept at a temperature of 0°C].

In order to bring down the temperature of the sample to 0°C it is used a Peltier element (208) which produces a temperature gradient between its cold and warm faces, proportional to the electric current supplied by the control electronic system. For this reason, the cold face of the Peltier element (208) is placed in contact with the posterior face of the aluminum block (100) where the vial (204) with the sample is inserted, and the warm face is placed in contact with the aluminum dissipator (206) that is coupled to the heat extraction fan (205). As more heat is extracted from the warm face, the temperature of the cold face is lower, as long as it is isolated from the exterior, which is accomplished isolating the aluminum block (100) with the lid (203A) and the base (203B), wherein both can be made of polystyrene. In addition both faces must be thermal isolated from each other.

The Peltier element (208) is in close contact with the aluminum dissipator (206) on one side and with the aluminum block (100) on the other side, and the aluminum block is also in close contact with the base (203B) with the help of sheet metal holders (207A and 207B) that are attached to the aluminum dissipator (206) by means of 4 fastener screws. In the same manner, the aluminum dissipator (206) and the heat extraction fan (205) are coupled by 4 fastener screws, and they are mounted on an aluminum support (212) of the cooling system already described. The lid (203A) has an orifice where the inferior extreme of the nozzle (305) for nitrogen supply goes in.

Besides the device (600) could also heat samples if the current polarity feeding the Peltier element (208) is inverted, which permits inverting its cold face with the warm one.

The temperature of the aluminum block (100) is electronically measured by a temperature sensor (200) attached to a side of the aluminum block (100), which provides an electric signal proportional to the aluminum block temperature (100) in the interval of -10 to 30 °C and as a consequence of conduction, proportional to the sample temperature in the vial (204).

A stepped motor (300A) allows vertically displacing a mobile nozzle holder (306), that holds the dosing nozzle (305), upwards to the initial "Home" position and downwards to a predetermined distance, which is 40 mm in this case. The "Home" position is detected by a limit switch (302) that is mounted on the sheet metal support (303) which is attached to the device (600) case (500). In this manner, when the mobile nozzle holder (306) pressures the limit switch (302), an electric signal indicates to the control electronic system that it must deactivate the stepped motor (300A) so it stops ascending.

The vertical displacement of the dosing nozzle (305) is possible because the stepped motor (300A) is stationary attached to a case (500) by a sheet metal support (301) and the linear displacement screw (300B) is attached to the mobile nozzle holder (306) that holds the dosing nozzle (305).

The linear displacement screw (300B) moves linearly by sequentially activating 4 coils of the stepped motor (300A). A specific sequence of 4 pulses make the linear displacement screw (300B) advance one step, while the inversed sequence makes it to go backwards one step. The speed at which the linear displacement screw (300B) advances or go backwards depends on the frequency of the pulses that activate the coils in the predetermined sequences of advance and retrocession.

The position of the dosing nozzle (305) is determined from the "Home" position by counting how many steps were given by the stepped motor (300A), because the lineal movement of the linear displacement screw (300B) is determined at a rate of 50 µm per step. The control electronic system is designed to displace the mobile nozzle holder (306), in this case, a maximum of 40 mm, that is, to generate a maximum of 800 steps of advance or retrocession. The stepped motor (300A), mobile nozzle holder (306) and dosing nozzle (305) as a whole are attached to the case (500) by a sheet metal support (301) in such a form that the inferior extreme of the dosing nozzle (305) can be introduced in the vial (204) 35 mm. at most.

In order to guide the vertical displacement of the mobile nozzle support (306) that holds the nozzle (305) there is a guide displacement axis (307A). For this purpose, the upper extreme of the guide displacement axis (307A) has a knob (307B) that allows it (307B) to go through an orifice in the case (500) and hang from the case without falling, while the middle part of the guide displacement axis (307A) goes through an orifice in a plate (304) attached to the sheet metal support (301), disposed to guarantee the vertical displacement of the mobile nozzle support (306). The mobile nozzle support (306) has two orifices which allow the guide displacement axis (307A) to slide through them.

The vertical mobility of the dosing nozzle (305) allows, thanks to the control electronic system, keeping relatively constant the distance between the solvent level in the vial, as solvent level falls due to evaporation, and the lower extreme of the dosing nozzle (305) for nitrogen supply, guaranteeing a better evaporation by sweeping the vapor in the superficial layer of solvent.

To insert (or remove) a vial (204) in the aluminum block (100) cavity the user must completely take apart the guide displacement axis (307A) from the device (600), holding it from the knob (307B) and vertically rising it to take it out of the case (500), which allows turning the mobile nozzle support (306) in 20 degrees to free the necessary space to remove the polyethene isolation lid (203A) that isolates the aluminum block (100) from the exterior in a thermal manner. This operation of inserting or removing the vial (204) can only be performed when the mobile support (306) is in "Home" position, because only in this position the lower extreme of the nozzle (305) is located 5 mm outside the vial (204).

In order to regulate the nitrogen flux supplied to the sample contained in the vial (204), during the evaporation process, it is provided a valve (400) which consists of an electromagnetic driver (400A) and a valve seat (400B). For the purpose of measuring the nitrogen flux, a valve (400) with a flow sensor (401) is connected to the exit by a first flexible hose (402A). The flow sensor (401) provides an electrical signal proportional to the nitrogen flux in the interval of 0 - 1000 sccm, which together with the control electrical signal of the valve (400) permit the electronic system to control the nitrogen flux supply (601), independently of the pressure variations of the nitrogen supply. Finally, the sensor (401) exit is connected to the dosing nozzle (305) by a second flexible hose (402B).

In order to measure the solvent level in the vial it is provided a capacitive sensor (202), which as a preference has 18 mm of diameter and allows detecting when the solvent level is below 0.5 ml. The capacitive sensor (202) is attached to the aluminum block (100) by a thread and lock nut (201). For this execution is not possible to use optic methods to detect dryness in the vial, because the solution is light-labile. On the other hand, the capacitive sensor (202) detects the dielectric variation on the air close to its sensitive extreme, based on the fact that the solvent has a different dielectric coefficient than the air.

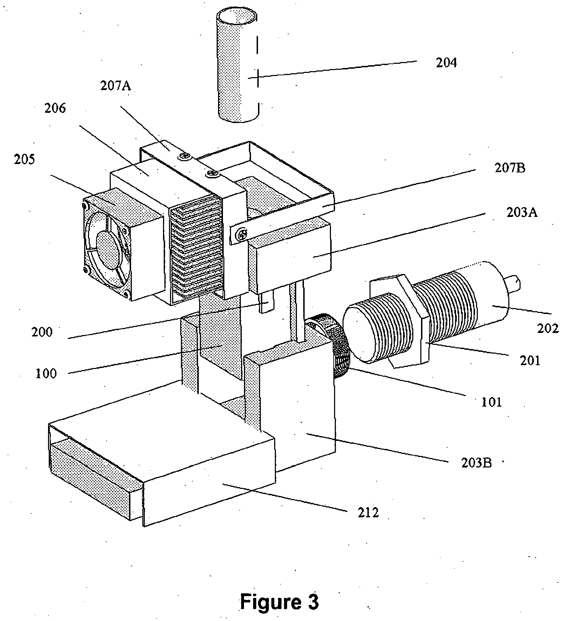

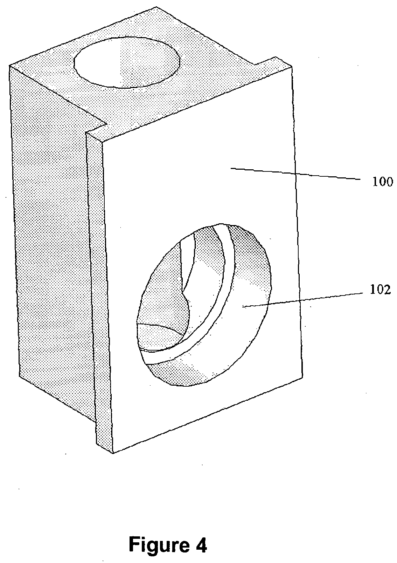

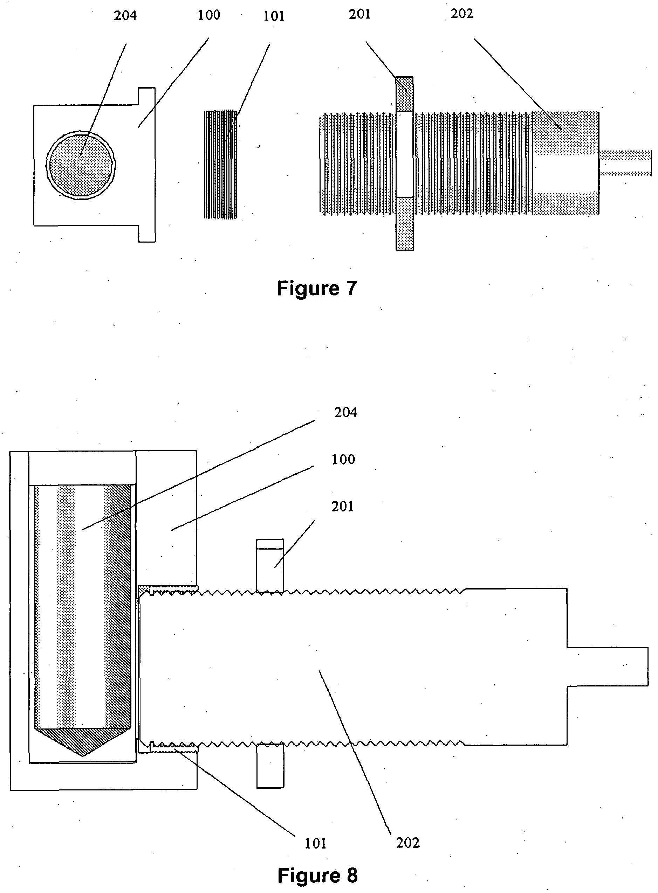

Figure 3 shows the cooling and minimum level detection system in detail. The assembly of the capacitive sensor (202) is critical, and it is curled in the thread of a Teflon ring (101) until almost touching the vial (204) inside the aluminum block (100), as shown in figure 8. The Teflon ring (101) with interior thread fits a lateral orifice (102) of the aluminum block (100), as shown in figure 4, and working as anchoring for the capacitive sensor (202) and also as thermal isolation for the aluminum block (100) from the exterior.

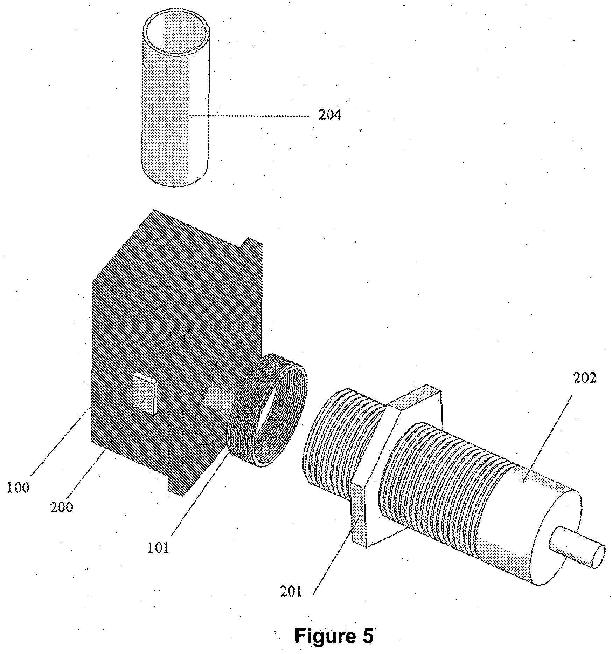

Figure 5 shows the arrangement of the aluminum block (100) with the temperature sensor (200), the vial (204), the Teflon ring (101) and the capacitive sensor (202) in an exploded view.

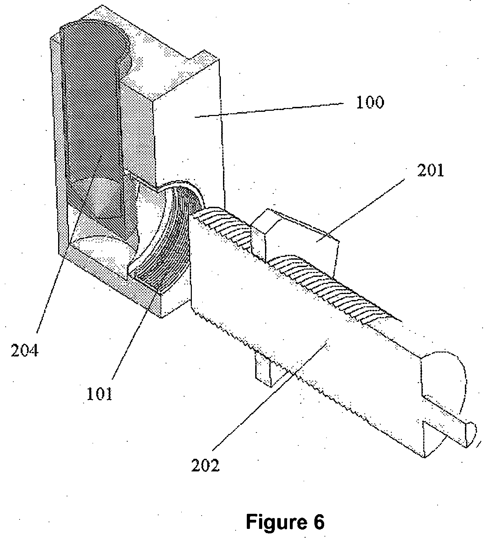

Figure 6 shows a cut view of the vial (204) and the Teflon ring (101) inserted in the aluminum block (100), and the way the capacitive sensor (202) must be introduced.

Figure 7 shows an exploded drawing of the system for minimum level detection in an upper view.

Figure 8 shows a cut view of the system for minimum level detection assembled.

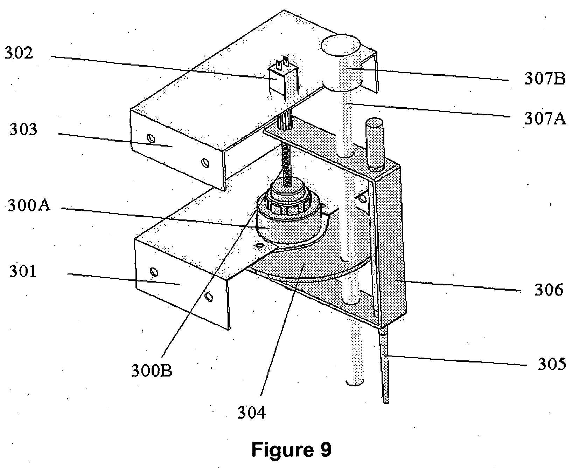

Figure 9 shows the displacement mechanism of the dosing nozzle (305) and of the "Home" detecting position. The sheet metal supports (301 and 303) are bolted to the case (500), while the mobile nozzle holder (306) is only attached to the linear displacement screw (300B). The stepped motor (300A) rotation makes the mobile nozzle holder (306) move, by sliding through the guide displacement axis (307A). The dosing nozzle (305) is inserted in the mobile nozzle holder (306) through two orifices disposed for that purpose. The plaque (304) and case (500) prevent the mobile nozzle holder (306) from rotating without restrain. The mobile nozzle holder (306) can be displaced upwards until touching the limit switch (302). The knob (307B) allows hanging the guide displacement axis (307A) from the case (500), and also allows holding the guide displacement axis (307A) to completely remove it from the device (600) in case that it is necessary to turn the mobile nozzle holder (306) to remove or insert a vial (204) in the aluminum block (100), while the nozzle (305) is in Home position.

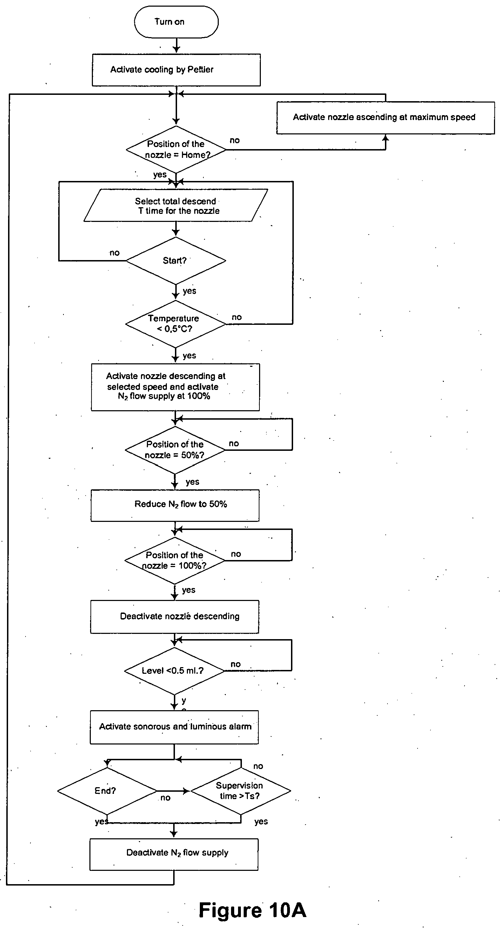

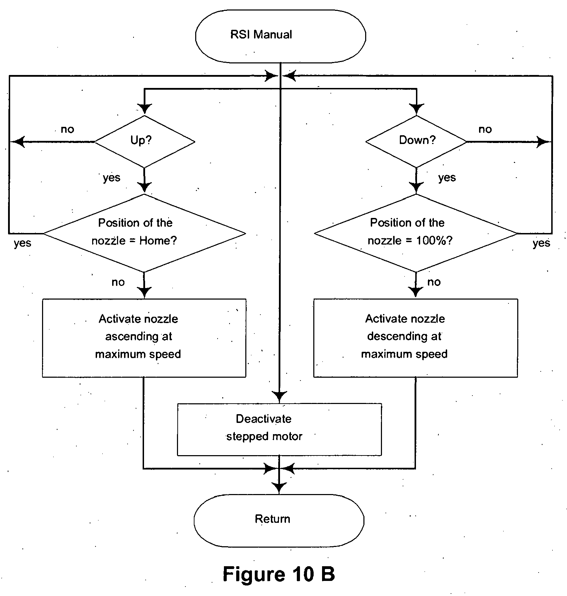

Figure 10 shows a flowchart that describes the semiautomatic operation procedure. The program starts by turning on the equipment, which activates the cooling system and verifies that the nozzle is in Home position. At that moment, the user can select the descending T time desired, and insert the vial in the aluminum block.

If the user pushes the "Start" button and the temperature of the aluminum block is below 0.5 °C, then the descending of the nozzle at the selected speed and the nitrogen flux at 100% are activated. As soon as the nozzle has performed 50% of its displacement, the flux is reduced at 50%, and when the nozzle reaches the end of its travel the stepped motor is deactivated. If the solvent level in the vial is below 0.5 ml, then a sonorous and luminous signal is activated to alert the user to supervise the end of the evaporation process. In the event that the user decides to end the process, he must press the "Fin" (end) button which shuts off the N₂ flux. Furthermore, the flux will also be shut off if the user does not press the "Fin" button before the Tₛ supervision time has passed.

At this moment, the program will verify that the nozzle ascends to the "Home" position, to leave the device ready to remove the dry vial and insert another one with a new sample to evaporate, repeating the described sequence.

Figure 10B describes the manual operation mode. This operation mode is activated when the user selects Manual mode using a switch for this purpose, initiating a mechanism of interruptions which consists in performing a routine denominated RSI Manual. This routine allows the user to bring up or down the nozzle from any position at maximum velocity. For this purpose, the user must press the "Subir" (up) or "Bajar" (down) button. In the event of the nozzle reaching the "Home" position or the maximum displacement allowed, the respective buttons will not work.

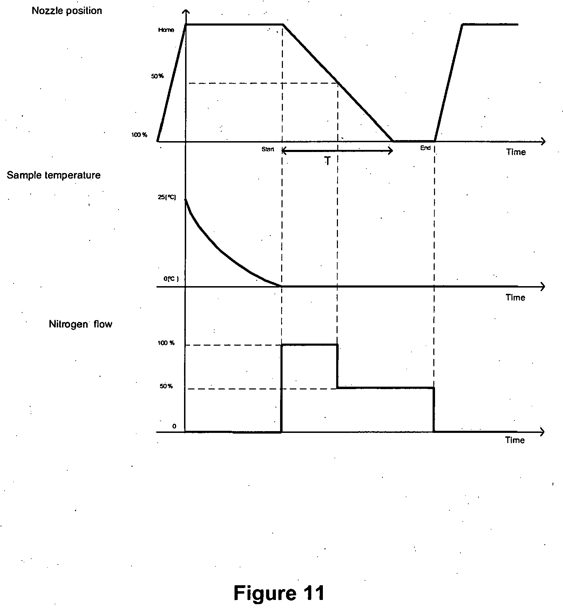

Figure 11 shows the temporal evolution of the temperature in a sample, the position of the nozzle and the nitrogen flux applied during one cycle of semiautomatic operation described in figure 10A. There can be seen that the nozzle ascends at maximum speed until reaching "Home" position and keeping that position until the temperature of the aluminum block is below 0.5°C and the user presses the "Start" button. Then the nozzle begins to descend at the selected speed (not maximum) and once the nozzle has traveled half of its total trip the flux is reduced 50%. As soon as the nozzle completes 100% of its trip in T minutes, the stepped motor is deactivated so the nozzle remains in that position until the solvent level is below 0.5 ml, which activates the sonorous and luminous alarm. From that moment the user must decide whether to finish the evaporation process by pressing the "Fin" button to shut off the N₂ flux or not. If the user does not do it before the Tₛ supervision time ends, the flux is automatically shut off. Immediately after the N₂ flux is shut off, the nozzle automatically ascends to the "Home" position.

## Claims

1. Semiautomatic device (600) to evaporate solvents by sweeping its vapor produced by exposure to a flux of N₂ gas, which is useful for processing atmospheric samples destined for identification and quantification of organic chemical compounds with toxic properties, comprising a container vial (204) that is placed in a thermal isolated aluminum container cooled by a Peltier element (208), wherein the device (600) further comprises:
- a solenoid valve (400) to externally supply the N₂ gas flux at a pressure below 4x10² kPa, and a flux sensor (401) to control that the gas flux is within the range of 0 - 1000 sccm (cubic centimeters per minute) under standard conditions of temperature and pressure;
- a dosing nozzle (305) for N₂ gas supply and a stepped motor (300A) provided to displace the dosing nozzle (305);
- a nozzle control to regulate the approach of said dosing nozzle (305) for N₂ gas supply to the sample comprised in the container vial (204);
- a sensor (200) to control that temperature of the sample is kept at 0 °C;
- a capacitive sensor (202) to detect the solvent level inside the container vial (204); and
- alarms to indicate the level of the extraction solution contained in the vial (204).

2. Semiautomatic device according to claim 1, wherein the nozzle (305) is displaced between 0 and 40 mm.

3. Semiautomatic device according to claim 1, wherein the stepped motor (300A) has a resolution of 50 µm of displacement per step.

4. Semiautomatic device according to claim 1, wherein the vial (204) has 18 mm of diameter and 5 ml of capacity.

5. Semiautomatic system to evaporate solvents by sweeping the vapor produced when it is exposed to a flux of N₂ gas for sample concentration, which is useful to process atmospheric samples destined to identification and quantification of organic chemical compounds with toxic properties, which comprises:
a) a semiautomatic device (600) as claimed in claim 1 with multiple sample processors to evaporate solvents by sweeping its vapor produced by exposure to a flux of N₂ gas for sample concentration,
b) a microcontroller that regulates the operation of said device (600), in each of the multiple sample processors, establishing controls for cooling the solvent, for regulating the displacement of the nozzle (305) for N₂ gas supply, and for the N₂ gas flux applied to the extraction solution; and
c) a user interface to select the parameters to be controlled and to visualize the alarms for each of the multiple sample processors.

6. System according to claim 5, wherein the nozzle (305) is displaced between 0 and 40 mm.

7. System according to claim 5, wherein the stepped motor (300A) has a resolution of 50 µm of displacement per step.

8. System according to claim 5, wherein the vial (204) has 18 mm of diameter and 5 ml of capacity.

9. Operation method of a semiautomatic device (600) to evaporate solvents by sweeping its vapor produced by exposure to a flux of N2 gas for concentration of samples, which is useful for processing atmospheric samples destined for identification and quantification of organic chemical compounds with toxic properties, comprising a container vial (204) that is placed in a thermal isolated aluminum container cooled by a Peltier element (208), which comprises the steps of:
a) providing a semiautomatic device (600) with multiple sample processors to evaporate solvents by sweeping its vapor produced by exposure to a flux of N₂ gas for sample concentration, wherein each semiautomatic device (600) comprises:
i. a solenoid valve (400) to externally supply the N₂ gas flux at a pressure below 4x10² kPa, and a flux sensor (401) to control that the gas flux is within the range of 0 - 1000 sccm (cubic centimeters per minute) under standard conditions of temperature and pressure;
ii. a dosing nozzle (305) for N₂ gas supply and a stepped motor (300A) provided to displace the dosing nozzle (305);
iii. a nozzle control to regulate the approach of said dosing nozzle (305) for N₂ gas supply to the sample comprised in the container vial (204);
iv. a sensor (200) to control that temperature of the sample is kept at 0 °C;
v. a capacitive sensor (202) to detect the solvent level inside the container vial (204); and
vi. alarms to indicate the level of the extraction solution contained in the vial (204).
b) turning on the semiautomatic device (600) and verifying that the nozzle (305) is placed at an initial position, which is at maximum distance from the sample;
c) inserting the container vial (204) inside the thermal isolated aluminum container;
d) activating the cooling control to bring down the sample temperature to 0 °C;
e) verifying that the sample temperature is <0,5 °C;
f) allowing the start of the evaporation process applying maximum N₂ gas flux to the sample, with which the nozzle (305) automatically begins descending;
g) reducing automatically the N₂ gas flux to 50% once the nozzle (305) has reached 50% of its total displacement;
h) stopping the descent of the nozzle (305) automatically once it has reached 100% of its total displacement;
i) waiting for alarm activation that indicates that the sample is close to dryness;
j) supervising the end of the evaporation process, to shut off the N₂ gas flux supply;
k) bringing the nozzle (305) to its initial position, which is at maximum distance from the sample; and
l) removing the sample.

10. Operation method according to claim 9, wherein the nozzle (305) is displaced between 0 and 40 mm.

11. Operation method according to claim 9, wherein the stepped motor (300A) has a resolution of 50 µm of displacement per step.

12. Operation method according to claim 9, wherein the vial (204) has 18 mm of diameter and 5 ml of capacity.

## Patentansprüche

1. Halbautomatische Vorrichtung (600) zur Verdampfung von Lösungsmitteln durch Spülung des durch Aussetzung einem N2-Gasstrom erzeugten Dampfes, welche nützlich zur Aufbereitung von atmosphärischen Proben ist, die zur Identifizierung und Quantifizierung von organischen chemischen Verbindungen mit toxischen Eigenschaften bestimmt sind, umfassend eine Behälterflasche (204), die in einem durch ein Peltier-Element (208) gekühlten thermisch isolierten Aluminiumbehälter angeordnet ist, wobei die Vorrichtung (600) weiterhin folgendes umfasst:
- ein Magnetventil (400), um äußerlich den N2-Gasstrom bei einem Druck unterhalb 4x102kPa zu zuführen, und einen Flusssensor (401), um zu kontrollieren, dass der Gasstrom im Bereich 0 - 1000 sccm (Kubikzentimeter pro Minute) unter Standardbedingungen von Temperatur und Druck stets liegt;
- eine Dosierdüse (305) für die N2-Gaszufuhr und einen Schrittmotor (300A), der bereitgestellt ist, um die Dosierdüse (305) zu verschieben;
- ein System zur Steuerung der Düse, um die Annäherung der Dosierdüse (305) für die N2-Gaszufuhr zu der in der Behälterflasche (204) enthaltenen Probe zu regulieren;
- einen Sensor (200), um zu kontrollieren, dass die Temperatur der Probe bei 0 °C gehalten wird;
- einen kapazitiven Sensor (202), um das Lösungsmittelspiegel in der Behälterflasche (204) zu ermitteln; und
- Alarme, um die Menge der in der Behälterflasche (204) enthaltenen Extraktionslösung anzuzeigen.

2. Halbautomatische Vorrichtung nach Anspruch 1, wobei die Düse (305) zwischen 0 und 40 mm verschoben wird.

3. Halbautomatische Vorrichtung nach Anspruch 1, wobei der Schrittmotor (300A) eine Auflösung von 50 µm Verschiebung pro Schritt hat.

4. Halbautomatische Vorrichtung nach Anspruch 1, wobei die Flasche (204) einen Durchmesser von 18 mm und eine Füllmenge von 5 ml hat.

5. Halbautomatische Vorrichtung zur Verdampfung von Lösungsmitteln durch Spülung des Dampfes, der erzeugt wird, wenn sie einem N2-Gasstrom zur Probenkonzentrierung ausgesetzt wird, welches nützlich zur Aufarbeitung von atmosphärischen Proben ist, die zur Identifizierung und Quantifizierung von organischen chemischen Verbindungen mit toxischen Eigenschaften bestimmt sind, umfassend:
a) eine halbautomatische Vorrichtung (600) wie in Anspruch 1 beansprucht mit Vorrichtungen zur mehrfachen Probenaufbereitung zur Verdampfung von Lösungsmitteln durch Spülung des durch Aussetzung einem N2-Gasstrom erzeugten Dampfes für die Konzentrierung von Proben,
b) einen Mikrokontroller, der den Betrieb der Vorrichtung (600) in jeder Vorrichtung zur mehrfachen Probenaufbereitung regelt, indem er Kontrolle zur Abkühlung des Lösungsmittels, zur Regulierung der Verschiebung der Düse (305) für die N2-Gaszufuhr und für den der Extraktionslösung ausgesetzten N2-Gasstrom erstellt; und
c) eine Benutzeroberfläche, um die zu kontrollierenden Parameter auszuwählen und die Alarme für jede Vorrichtung zur mehrfachen Probenaufbereitung zu visualisieren.

6. System nach Anspruch 5, wobei die Düse (305) zwischen 0 und 40 mm verschoben wird.

7. System nach Anspruch 5, wobei der Schrittmotor (300A) eine Auflösung von 50 µm Verschiebung pro Schritt hat.

8. System nach Anspruch 5, wobei die Flasche (204) einen Durchmesser von 18 mm und eine Füllmenge von 5 ml hat.

9. Betriebsverfahren einer halbautomatischen Vorrichtung (600) zur Verdampfung von Lösungsmitteln durch Spülung des durch Aussetzung einem N2-Gasstrom für die Konzentrierung von Proben erzeugten Dampfes, welche nützlich zur Aufbereitung von atmosphärischen Proben ist, die zur Identifizierung und Quantifizierung von organischen chemischen Verbindungen mit toxischen Eigenschaften bestimmt sind, umfassend eine Behälterflasche (204), die in einem durch ein Peltier-Element (208) gekühlten thermisch isolierten Aluminiumbehälter angeordnet ist, welches die folgenden Schritte umfasst:
a) bereitstellen einer halbautomatischen Vorrichtung (600) mit Vorrichtungen zur mehrfachen Probenaufbereitung zur Verdampfung von Lösungsmitteln durch Spülung des durch Aussetzung einem N2-Gasstrom erzeugten Dampfes für die Konzentrierung von Proben, wobei jede halbautomatische Vorrichtung (600) folgendes umfasst:
i. ein Magnetventil (400), um äußerlich den N2-Gasstrom bei einem Druck unterhalb 4x102kPa zu zuführen, und einen Flusssensor (401), um zu kontrollieren, dass der Gasstrom im Bereich 0 - 1000 sccm (Kubikzentimeter pro Minute) unter Standardbedingungen von Temperatur und Druck stets ist;
ii. eine Dosierdüse (305) für die N2-Gaszufuhr und einen Schrittmotor (300A), der bereitgestellt ist, um die Dosierdüse (305) zu verschieben;
iii. ein System zur Steuerung der Düse, um die Annäherung der Dosierdüse (305) für die N2-Gaszufuhr zu der in der Behälterflasche (204) enthaltenen Probe zu regulieren;
iv. einen Sensor (200), um zu kontrollieren, dass die Temperatur der Probe bei 0 °C gehalten wird;
v. einen kapazitiven Sensor (202) um den Lösungsmittelspiegel in der Behälterflasche (204) zu ermitteln; und
vi. Alarme, um die Menge der in der Behälterflasche (204) enthaltenen Extraktionslösung anzuzeigen.
b) das Einschalten der halbautomatischen Vorrichtung (600) und das Verifizieren, dass die Düse (305) in der Anfangsposition angeordnet ist, welche sich in einem maximalen Abstand zur Probe befindet.
c) das Einsetzen der Behälterflasche (204) in den thermisch isolierten Aluminiumbehälter;
d) das Aktivieren der Kühlregelung, um die Probetemperatur bis 0 °C zu senken;
e) das Verifizieren, dass die Probetemperatur <0,5 °C ist;
f) das Ermöglichen, dass das Verdünstungsverfahren anfängt, indem die Probe einem maximalen N2-Gasstrom ausgesetzt wird, wodurch die Senkung der Düse (305) automatisch anfängt;
g) das automatische Reduzieren des N2-Gasstromes bis 50%, wenn die Düse (305) 50% ihrer gesamten Verschiebung erreicht hat;
h) das automatische Stoppen der Senkung der Düse (305), wenn sie 100% ihrer gesamten Verschiebung erreicht hat;
i) das Abwarten bis die Alarm aktiviert wird, was anzeigt, dass die Probe nahezu trocken ist;
j) das Überwachen des Endes des Verdünstungsverfahrens, um die Zufuhr von N2-Gasstrom abzubrechen;
k) das Bringen der Düse (305) zu ihrer Anfangsposition, welche sich in einem maximalen Abstand von der Probe befindet; und
l) das Entfernen der Probe.

10. Betriebsverfahren nach Anspruch 9, wobei die Düse (305) zwischen 0 und 40 mm verschoben wird.

11. Betriebsverfahren nach Anspruch 9, wobei der Schrittmotor (300A) eine Auflösung von 50 µm Verschiebung pro Schritt hat.

12. Betriebsverfahren nach Anspruch 9, wobei die Flasche (204) einen Durchmesser von 18 mm und eine Füllmenge von 5 ml hat.

## Revendications

1. Dispositif semi-automatique (600) destiné à l'évaporation de solvants par balayage de la vapeur produite par exposition à un flux de N2 gazeux, qui est utile pour traiter des échantillons atmosphériques destinés à l'identification et quantification de composés chimiques organiques ayant des propriétés toxiques, comprenant un flacon (204) qui est situé dans un récipient en aluminium thermiquement isolé refroidi moyennant un élément Peltier (208), dans lequel le dispositif (600) comprend en outre:
- une électrovanne à solénoïde (400) destinée à fournir de façon externe le flux de N2 gazeux à une pression inférieure à 4x102 kPa, et un capteur de flux (401) pour contrôler que le flux de gaz est dans l'intervalle allant de 0 à 1000 sccm (centimètres cubiques par minute) dans les conditions normales de température et de pression ;
- une buse de dosage (305) pour l'alimentation de N2 gazeux et un moteur pas à pas (300A) fourni pour déplacer la buse de dosage (305) ;
- un système de réglage de buse pour régler l'approximation de ladite buse de dosage (305) pour l'alimentation de N2 gazeux à l'échantillon compris dans le flacon (204) ;
- un capteur (200) pour contrôler que la température de l'échantillon est maintenue à 0 °C ;
- un capteur capacitif (202) pour détecter le niveau de solvant dans le flacon (204) ; et
- des alarmes pour indiquer le niveau de la solution d'extraction contenue dans le flacon (204).

2. Dispositif semi-automatique selon la revendication 1, dans lequel la buse (305) est déplacée entre 0 et 40 mm.

3. Dispositif semi-automatique selon la revendication 1, dans lequel le moteur pas à pas (300A) a une résolution de 50 µm de déplacement par étape.

4. Dispositif semi-automatique selon la revendication 1, dans lequel le flacon (204) a un diamètre de 18 mm et une capacité de 5 ml.

5. Système semi-automatique pour évaporer des solvants par balayage de la vapeur produite lorsqu'il est exposé à un flux de N2 gazeux pour la concentration d'échantillons, qui est utile pour traiter des échantillons atmosphériques destinés à l'identification et quantification de composés chimiques organiques ayant des propriétés toxiques, qui comprend :
a) un dispositif semi-automatique (600) tel que revendiqué dans la revendication 1 ayant des processeurs pour des échantillons multiples pour évaporer des solvants par balayage de la vapeur produite par exposition à un flux de N2 gazeux pour la concentration d'échantillons,
b) un microcontrôleur qui régule l'opération dudit dispositif (600), dans chacun des processeurs d'échantillons multiples, en établissant des contrôles pour refroidir le solvant, pour réguler le déplacement de la buse (305) pour l'alimentation du N2 gazeux, et pour le flux de N2 gazeux appliqué à la solution d'extraction ; et
c) une interface utilisateur pour choisir les paramètres à contrôler et pour visualiser les alarmes pour chacun des processeurs d'échantillons multiples.

6. Système selon la revendication 5, dans lequel la buse (305) est déplacée entre 0 et 40 mm.

7. Système selon la revendication 5, dans lequel le moteur pas à pas (300A) a une résolution de 50 µm de déplacement par étape.

8. Système selon la revendication 5, dans lequel le flacon (204) a un diamètre de 18 mm et une capacité de 5 ml.

9. Procédé d'opération d'un dispositif semi-automatique (600) destiné à l'évaporation de solvants par balayage de la vapeur produite par exposition à un flux de N2 gazeux pour la concentration d'échantillons, qui est utile pour traiter des échantillons atmosphériques destinés à l'identification et quantification de composés chimiques organiques ayant des propriétés toxiques, comprenant un flacon (204) qui est situé dans un récipient en aluminium thermiquement isolé refroidi moyennant un élément Peltier (208), qui comprend les étapes suivantes :
a) fournir un dispositif semi-automatique (600) ayant des processeurs pour des échantillons multiples pour évaporer des solvants par balayage de la vapeur produite par exposition à un flux de N2 gazeux pour la concentration d'échantillons, dans lequel chaque dispositif semi-automatique (600) comprend :
i. une électrovanne à solénoïde (400) destinée à fournir de façon externe le flux de N2 gazeux à une pression inférieure à 4x102 kPa, et un capteur de flux (401) pour contrôler que le flux de gaz est dans l'intervalle allant de 0 à 1000 sccm (centimètres cubiques par minute) dans les conditions normales de température et de pression ;
ii. une buse de dosage (305) pour l'alimentation de N2 gazeux et un moteur pas à pas (300A) fourni pour déplacer la buse de dosage (305) ;
iii. un système de réglage de buse pour régler l'approximation de ladite buse de dosage (305) pour l'alimentation de N2 gazeux à l'échantillon compris dans le flacon (204) ;
iv. un capteur (200) pour contrôler que la température de l'échantillon est maintenue à 0 °C ;
v. un capteur capacitif (202) pour détecter le niveau de solvant dans le flacon (204) ; et
vi. des alarmes pour indiquer le niveau de la solution d'extraction contenue dans le flacon (204).
b) allumer le dispositif semi-automatique (600) et vérifier que la buse (305) est située dans une position initiale, qui est à une distance maximale par rapport à l'échantillon ;
c) insérer le flacon (204) dans le récipient d'aluminium thermiquement isolé ;
d) activer le contrôle de refroidissement pour faire descendre la température d'échantillon jusqu'à 0 °C ;
e) vérifier que la température d'échantillon est <0,5 °C;
f) permettre le démarrage du processus d'évaporation en appliquant un flux de N2 gazeux maximal à l'échantillon, avec lequel la buse (305) commence à descendre de façon automatique ;
g) réduire de façon automatique le flux de N2 gazeux jusqu'à 50% une fois que la buse (305) a atteint 50% de son déplacement total ;
h) arrêter la descente de la buse (305) de façon automatique une fois qu'elle a atteint 100% de son déplacement total ;
i) attendre l'activation de l'alarme, qui indique que l'échantillon est près de sécheresse ;
j) superviser la fin du processus d'évaporation afin de couper l'alimentation de flux de N2 gazeux ;
k) porter la buse (305) à sa position initiale, qui est à une distance maximale par rapport à l'échantillon ; et
l) enlever l'échantillon.

10. Procédé d'opération semi-automatique selon la revendication 9, dans lequel la buse (305) est déplacée entre 0 et 40 mm.

11. Procédé d'opération selon la revendication 9, dans lequel le moteur pas à pas (300A) a une résolution de 50 µm de déplacement par étape.

12. Procédé d'opération selon la revendication 9, dans lequel le flacon (204) a un diamètre de 18 mm et une capacité de 5 ml.
